# EUROPÄISCHE PATENTSCHRIFT

(11) **EP 2 994 401 B1**
(45) Veröffentlichungstag und Bekanntmachung des Hinweises auf die Patenterteilung: **08.05.2019**
(21) Anmeldenummer: 14708253.1
(22) Anmeldetag: 06.03.2014
(51) Int. Cl.: B65G 15/40, B65G 15/42, B65G 15/08

(54) **ROHRFÖRDERGURT ODER TASCHENFÖRDERGURT MIT CHEVRON-PROFILIERUNG (SCHRÄGNOCKEN-PROFILIERUNG) DER TRAGSEITIGEN DECKPLATTE**
TUBULAR CONVEYOR BELT OR POCKET CONVEYOR BELT HAVING A CHEVRON PROFILE (ANGLED-CAM PROFILE) OF THE CARRYING-SIDE COVER PLATE
BANDE TRANSPORTEUSE TUBULAIRE OU BANDE TRANSPORTEUSE À POCHE DONT LA PLAQUE DE RECOUVREMENT CÔTÉ SUPPORT PRÉSENTE DES PROFILÉS EN CHEVRONS (PROFILÉS EN CAMES OBLIQUES)

(30) Priorität: 06.05.2013 DE 102013104595; 21.06.2013 DE 102013106479
(43) Veröffentlichungstag der Anmeldung: 16.03.2016
(73) Patentinhaber: ContiTech Transportbandsysteme GmbH, 30165 Hannover (DE)
(72) Erfinder: MINKIN, Andrey, 37083 Göttingen (DE)
(74) Vertreter: Finger, Karsten
(86) Internationale Anmeldenummer: PCT/EP2014/054296
(87) Internationale Veröffentlichungsnummer: WO 2014/180585

(56) Entgegenhaltungen:
- WO-A1-2004/037689
- DE-B- 1 182 593
- DE-C- 920 477
- DE-U1- 29 720 710
- JP-A- 2002 370 812
- JP-U- S5 883 314
- US-A- 810 510
- US-A1- 2001 045 344

## Beschreibung

Die Erfindung betrifft einen Fördergurt gemäß dem Oberbegriff der Ansprüche 1 und 2. In der Fördertechnik von losen Gütern wie Schüttgütern, d.h. z.B. Gestein, Bodenschätzen, Abraummaterial, landwirtschaftlichen Produkten etc. werden seit langem gemuldete Fördergurte verwendet, die das Fördergut an einer Aufnahmestelle auf ihrer Tragseite aufnehmen und an einer Abgabestelle abgeben. Da das Fördergut während des Transportes gegenüber der Umwelt offen gefördert wird, können Verunreinigungen und Witterungseinflüsse der Umwelt auf das Fördergut einwirken und das Fördergut kann die Umwelt belasten und auch gefährden. Auch können mit gemuldeten Fördergurten aufgrund ihrer Konstruktion Kurven und Steigungen nur in einem eingeschränkten Maße realisiert werden. So kann in der Regel bei herkömmlichen Bandanlagen ein Neigungswinkel von 20° Steigung nicht überschritten werden. Wird hier die Grenze der Machbarkeit erreicht, müssen mehrere u.a. spezielle Fördergurte mit Übergabestellen verbunden werden. Dies erhöht den Aufwand und damit die Kosten der Förderanlage deutlich.

Zur Beseitigung dieser Nachteile wurden in den 80er Jahren des vergangenen Jahrhunderts geschlossen betriebene Fördergurte entwickelt, die als Rollgurte, Schlauchgurte, Rohrfördergurte, Pipe Belts, MegaPipes oder Tube Belts bezeichnet werden. Die Rollgurte werden zwischen der Aufnahme- und Abgabestelle zu einem geschlossenen Schlauch zusammengerollt, indem sich die äußeren Gurtflanken überlappen und damit das Fördergut vollständig einschließen. Hierdurch werden das Fördergut im Rollgurt und die Umwelt voneinander völlig getrennt, da der Rollgurt über die Förderstrecke verschlossen bleibt.

Nur zur Aufnahme und Abgabe des Transportgutes breitet sich ein Rollgurt aus und nimmt die Gestalt eines konventionellen gemuldeten Fördergurtes an. Folglich sind die Schüttgutverunreinigungen auf der Förderstrecke und die damit verbundene Umweltbelastung ausgeschlossen. Auch kann das Fördergut während des Transports von der Umgebung nicht beeinflusst werden. Weitere wesentliche Vorteile der Rollgurte gegenüber den herkömmlichen gemuldeten Fördergurten liegen in der Realisierungsmöglichkeit von sehr engen dreidimensionalen Kurven und in den relativ hohen Neigungswinkeln von bis zu 35° Steigung, wodurch die Umsetzung von komplizierten dreidimensionalen kurvigen Linienführungen mit einer einzigen Anlage möglich ist. Da Rollgurte üblicherweise eine glatte Oberfläche ihrer Tragseite aufweisen, sind die Neigungswinkel jedoch auf eine Steigung von bis zu 35° je nach Schüttguteigenschaften beschränkt.

Zur Beseitigung dieser Nachteile wurden ferner geschlossen betriebene Fördergurte entwickelt, die als SICON-Fördergurte, Taschen(förder)gurte oder Pocket Conveyor Belts bekannt sind. Ein Taschenfördergurt besteht aus zwei gewebeverstärkten Profilen mit je einem einvulkanisierten Stahlseil als Zugträger. Die Profile laufen über die Rollensätze und tragen die das Fördergut aufnehmende Tasche. Diese tropfenförmige Tasche besteht aus hochflexiblem Gummi und ist mittels Heßvulkanisation mit den Profilen verbunden. Die Profile sind während des Transportes übereinander angeordnet, sodass der Gurt staubdicht abgeschlossen ist. Getragen und geführt wird der Gurt durch spezielle Rollensätze, welche für den geschlossen Zustand des Gurtes aus einer Tragrolle und einer Führungsrolle bestehen. Zum Be- und Entladen des Gurtes und für Kurven und Steigungen stehen weitere Rollensätze zur Verfügung, die aus je einer Tragrolle und ein bis drei Führungsrollen bestehen.

Ähnlich wie bei Rollgurten liegen die wesentlichen Vorteile der Taschenfördergurt gegenüber den herkömmlichen gemuldeten Fördergurten in der Realisierungsmöglichkeiten von sehr engen 3D-Kurven und in den relativ hohen Neigungswinkel von bis zu 35°; bei herkömmlicher Bandanlagen kann in der Regel der Neigungswinkel 20° nicht überschreiten. Hierdurch ist die Umsetzung von komplizierten 3D-kurvigen Linienführungen mit einer einzigen Anlage ohne Übergabestellen auf der Förderstrecke möglich. Zusätzlich sind das Material im Taschenfördergurt und die Umwelt voneinander völlig getrennt, da der Taschenfördergurt über die Förderstrecke verschlossen bleibt. Für das Beladen wird der Taschenfördergurt mit Hilfe eines speziellen Rollensatzes zum Öffnen und Schließen des Gurtes geöffnet. Die Entladung des Gurtes kann an einem Überkopfabwurf oder einer S-förmigen Abwurfstation stattfinden. An der S-förmigen Abwurfstation besteht die Möglichkeit, den Gurt optional zu entleeren, oder das Fördergut wieder in den Gurt zu schütten.

Ein Taschenfördergurt unterscheidet sich vom konventionellen Rollgurt nicht nur im Aufbau, sondern auch in der Funktion und Anwendungsbereichen. So kann ein Taschenfördergurt, abhängig von der Profilgröße, in Radien von 0,6 m oder 1,0 m durchlaufen, welche von einem konventionellen Rollgurt nicht realisierbar sind. Der minimalle Kurvenradius, der mit einem Rollgurt realisiert werden kann, liegt bei ca. 30 m. Anderes als beim Rollgurt bleiben die Förderlänge, der Förderquerschnitt und die damit auch verbundene Förderleistung und max. mögliche Material-Korngröße eines Taschenfördergurt sehr begrenzt. Das alles prädestiniert einen Taschenfördergurt für einen "innenbetrieblichen geschlossenen" Transport von industriellen Schüttgütern, wobei ein Rollgurt mehr als ein "außerbetriebliches geschlossenes" Förderprinzip für die gesamte Korngrößen-Palette in der Praxis angesehen wird.

Für einige Anwendungsfälle werden gleichzeitig die Vorteile der Rollgurte bzw. der Taschenfördergurte und der Steilfördergurte benötigt, d.h. ein Rollgurt bzw. Taschenfördergurt, der auch bei Neigungswinkeln über 35° Steigung eingesetzt werden kann.

Aus den Druckschriften CA 2 275 655 C, DE 190 58 86 A1, DE 691 17 772 T2, JP 480 48 385 U, JP 580 83 314 U, US 2012 000 751 A1, FR 14 968 97 A, GB 88 76 98 A, JP 582 16 803 A,US 3 392 817 A und WO 2005 085 101 A1 sind einige technische Lösungen hierzu bekannt, um den Neigungswinkel von Rollgurten und Taschengurten zu erhöhen, indem Profile unterschiedlicher Form auf die tragseitige Deckplatte eines Rollgurtes bzw.

Taschengurtes aufgebracht wurden. Der Kerngedanke dieser Ansätze bestand jeweils darin, mit dem Fördergurt verbundenen elastischen Streifen aus Gummi oder Kunststoff quer zur Längsrichtung des Fördergurtes anzubringen und in bestimmten Abständen in Längsrichtung voneinander zu versetzen. Dabei können die Querstreifen sowohl die gesamte Gurtbreite als auch nur einen Teil der Gurtbreite überspannen. Aus diesen Druckschriften kann festgestellt werden, dass die Querstreifen sowohl durchgehend als Leisten oder wellenförmige Streifen als auch geteilt, z.B. rechtwinklig, sägezahnartig oder trapezförmig, ausgeführt werden können. Die geteilten Querstreifen werden dabei so ausgeführt, dass ihre Flanken bei der schlauchförmigen bzw. taschenförmigen Verformung des Rollgurtes bzw. Taschengurtes annähernd aneinander anliegen oder sich überschneiden und so in Längsrichtung beabstandete Trennwände ausbilden. Je nach Höhe, d.h. radialer Ausbildung, der Querstreifen wird das Fördergut während des Transportes kraft- und formschlüssig gehalten, so dass das Rückrutschen des Fördergutes im Fördergurt verhindern und so größere Steigungen realisiert werden können. Bei einer nahezu geschossenen Ausbildung der Querstreifen können sogar senkrechte Förderrichtungen umgesetzt werden, wobei eine rein formschlüssige Kraftübertragung stattfindet.

Nachteilig ist bei den zuvor beschriebenen Rollgurten bzw. Taschengurten, dass ihre Herstellung sehr aufwendig und damit teuer ist. So müssen die Querstreifen aufgrund ihrer Größe, insbesondere ihrer radialen Ausdehnung, als separate Elemente hergestellt und z.B. mittels Aufkleben, d.h. durch Kaltvulkanisation, nachträglich auf den Fördergurt aufgebracht werden. Dies erfordert die separate Herstellung der Querstreifen sowie deren nachträgliche Montage auf dem Fördergurt als weitere Arbeitsschritte. Eine einteilige Herstellung von Fördergurten mit Querstreifen, d.h. gleich bei der Vulkanisation des Fördergurtes, scheidet fertigungstechnisch aufgrund der Größe der Querstreifen aus. Auch kann es erforderlich sein, die Querstreifen erst am Einsatzort des Fördergurtes auf diesem zu montieren, um das Volumen des Fördergurtes für den Transport nicht zu vergrößern. Ferner stellen die Klebestellen eine Schwachstelle dar, die im Laufe der Zeit eher versagen wird als andere Bestandteile des Fördergurtes.

Nachteilig ist ferner, dass falls die bekannten Rollgurte bzw. Taschengurte für größere Neigungswinkel, d.h. über 35° Steigung geeignet sind, das Fördergut formschlüssig durch die Querstreifen gehalten wird und diese entsprechend belastet werden. Dies erfordert eine entsprechende stabile und radial ausgedehnte Ausbildung der Querstreifen mit höheren Material- und Herstellungskosten als bei flacheren Profilierungen, die jedoch derartig e Steigungen nicht erlauben. Auch erhöhen die höheren Querstreifen die Transportkosten der Fördergurte, weil diese weniger eng gewickelt transportiert werden können, d.h. weniger Gurtlänge pro zusammen gerollter Gurttrommel auf einmal transportiert werden kann. Gleichzeitig werden hierdurch die Gurtstücke, die pro Trommel auf einmal transportiert werden können, kürzer, so dass der Aufwand der Montage der endlos geschlossenen Fördergurte an der Fördergurtanlage steigt. Wie auch herkömmliche Rollgurte haben die Taschenfördergurte eine glatte Oberfläche, wodurch die Neigungswinkel von bis zu 35° je nach Schüttguteigenschaften realisierbar sind. WO2004/037689A1 beschreibt einen Fördergurt nach dem Oberbegriff der Ansprüche 1 und 2.

Die Aufgabe der vorliegenden Erfindung ist es, einen Fördergurt der eingangs beschriebenen Art bereit zu stellen, der einfach und kostengünstig hergestellt und transportiert und gleichzeitig als Rollfördergurt bzw. Taschenfördergurt eingesetzt werden kann und größere Steigungen als bisher bekannt, d.h. Neigungswinkeln über 35° Steigung, ermöglicht.

Die Aufgabe wird erfindungsgemäß durch einen Fördergurt mit den Merkmalen gemäß Anspruch 1 oder 2 gelöst. Vorteilhafte Weiterbildungen sind in den Unteransprüchen beschrieben.

Somit betrifft die vorliegende Erfindung einen Fördergurt gemäß dem Oberbegriff des Anspruchs 1 oder 2, der sich dadurch auszeichnet, dass die Profilierung eine Chevron-Profilierung ist, die Diagonalelemente aufweist, die sich zumindest abschnittsweise sowohl in Längsrichtung als auch in Querrichtung des Fördergurtes erstrecken und die paarweise zusammen eine V-Form ergeben, deren Spitze in Längsrichtung entgegen der Förderrichtung ausgerichtet ist. Die Profilierung ist vorzugsweise über die gesamte Längsrichtung des Fördergurtes vorgesehen.

Der vorliegenden Erfindung liegt die Erkenntnis zugrunde, dass der Neigungswinkel eines Rohrfördergurtes bzw. Taschenfördergurtes dadurch auf über 35° Steigung erhöht werden kann, indem die Merkmale der Schrägnockenbänder, bei denen einem Verrutschen des Fördergutes bei Neigungen durch eine schräg zur Förderrichtung verlaufende Profilierung der Oberseite der tragseitigen Deckplatte entgegen gewirkt wird, auf die Rohrfördergurte bzw. Taschenfördergurte übertragen und angewendet werden. Derartige Profilierungen für Schrägnockenbänder sind dem Fachmann auf diesem Gebiet als Chevron-Profilierung bekannt. Der Rohrfördergurt bzw. Taschenfördergurt kann dann Neigungen bis zum Böschungswinkel des Fördergutes oder darüber hinaus annehmen. Beim Zusammenrollen eines Rollgurtes bzw. beim Zusammenschließen eines Taschenfördergurtes mit dem Schüttgut aus der gemuldeten bzw. ausgebreiteten oder flachen Form in eine zusammengerollte Rohrform bzw. geschlossenen Tropfenform ändert sich ein aktiver Rankinescher Zustand des Materials (Schüttgut ist aufgelockert) in den passiven Zustand (Schüttgut ist verdichtet), wodurch sich Neigungen eines Rohrfördergurtes bzw. Taschenfördergurtes höher als ein Böschungswinkel des Fördergutes erwarten lassen. Der Böschungswinkel bzw. der effektive innere Reibwinkel eines Schüttgutes ist in der Regel deutlich höher als ein Wandreibwinkel. Er liegt für die meisten Schüttgüter bei zwischen 22° und 52°, kann jedoch auch größer sein.

Die Schrägnockenbänder sind auch als Chevron-Gurte, Steilfördergurte oder Stollengurte bekannt. Sie stellen gemuldete Fördergurte mit einer profilierten tragseitigen Deckplatte dar. Aufgrund dieser Profilierung, die einem Verrutschen des Fördergurtes bei Neigungswinkeln bis zu 45° entgegenwirken kann, gehören die Schrägnockengurte zu den Steilfördergurten. Als gemuldete Fördergurte weisen sie jedoch die Nachteile auf, die bei Rohrfördergurten durch ihr Verschließen vermieden werden. Daher führt eine Kombination dieser Fördergurtmerkmale zu einem Rohrfördergurt bzw. Taschenfördergurt, der als Steilfördergurt eingesetzt werden kann, d.h. bei Neigungswinkeln von über 35° Steigung, ohne seine wesentlichen Vorteile zu verlieren.

Dabei unterscheidet sich die Profilierung der Schrägnockengurte von den Querstreifen, die bei Rollfördergurten bzw. Taschenfördergurten zur Erhöhung der Neigungswinkel bekannt sind. Diese Querstreifen werden nämlich derart dimensioniert, insbesondere in radialer Richtung des geschlossenen Fördergurtes bzw. senkrecht zur Oberfläche der tragseitigen Deckplatte, dass sie das zu haltende Fördergut teilweise bis vollständig formschlüssig halten. Hierzu ragen die Querstreifen teilweise soweit zur Mittelachse des geschlossenen Fördergurtes hin, dass die Querstreifen einzelne in Längsrichtung fast vollständig geschlossene Kammern im Inneren des Fördergurtes bilden. Derartige Querstreifen erfordern jedoch die separate Herstellung und Montage.

Hingegen zeichnen sich die Profilierungen der Schrägnockengurte dadurch aus, dass sie in radialer Richtung des geschlossenen Rohrfördergurtes bzw. Taschenfördergurtes bzw. senkrecht zur Oberfläche der tragseitigen Deckplatte so flach ausgebildet sind, dass sie vorzugsweise bei der Herstellung des Fördergurtes, d.h. bei der Vulkanisation, mit ausgebildet werden können. Hierdurch sind sie einteilig mit der tragseitigen Deckplatte ausgebildet. Diese Art der Herstellung begrenzt jedoch die Höhe der Profilierung.

Die Profilierungen der Schrägnockenbänder machen diesen Nachteil jedoch, wie die Bezeichnung dieser Art der Förderbänder ausdrückt, durch ihre Anordnung bzw. Ausgestaltung wieder wett. So sind die Profilierungen, im Gegensatz zu den in Umfangsrichtung der Rohrfördergurte des Standes der Technik verlaufenden Querstreifen, schräg zur Förderrichtung, d.h. zur Längsrichtung des Fördergurtes, angeordnet. Schräg bedeutet hierbei, dass sich die Profilierungen als Diagonalelemente zumindest abschnittsweise sowohl in Längsrichtung als auch in Querrichtung des Fördergurtes erstrecken. Gleichzeitig sind die schrägen Elemente der Profilierung, die auch als Schrägnocken bezeichnet werden können, so angeordnet, dass sie zusammen V-förmige Spitzen bilden, in denen sich das Fördergut abstützen und durch die innere Reibwirkung innerhalb des Fördergutes dieses auch bei größeren Steigungen halten kann. Auf diese Weise erfolgt die Kraftübertragung zwischen der tragseitigen Deckplatte und dem Fördergut über die schrägen Profilierungen vorwiegend kraftschlüssig wie folgt:
Im Bereich der Gurtbreite, in dem die Profilierung aufgebracht ist, d.h. im mittleren Bereich in Querrichtung des Fördergurtes, decken die Schrägnocken die gesamte Länge in Längsrichtung des Fördergurtes durchgehend ab. Ausgenommen sind wenigstens die Gurtflanken, die den Überlappungsbereich des Rohrfördergurtes bilden, und ggfs. die an den Überlappungsbereich angrenzenden Bereiche, bzw. die Breite der Schrägnockenprofilierung, die im Wesentlichen der Gurtbreite bis zur Horizontalen des geschlossenen Taschenfördergurtes entspricht, d.h. die Breite des Fördergut aufnehmenden Bereichs der ausgebildeten Tropfenform des Taschenfördergurtes. Dies führt dazu, dass auch in den Bereichen der Oberfläche der tragseitigen Deckplatte, wo im Zwischenraum der voneinander versetzten Profilierungen keine Kräfteübertragung bzw. Mitnahme des Fördergutes durch die Schrägnocken selbst stattfindet, die Kräfte vom Fördergut auf den Fördergurt infolge der inneren Reibkräfte des Fördergutes übertragen werden. Durch die durchgehende Anordnung der Schrägnocken in Längsrichtung wird ein besserer Griff zwischen dem Fördergurt und dem Fördergut sichergestellt. Da die Schrägnocken relativ geringe Höhen, d.h. in der Regel zwischen 10 mm und 50 mm, aufweisen und vor allem zur Erhöhung der Wandreibung zwischen dem Fördergut und dem Fördergurt führen, handelt es sich hier um einen kraftschlüssigen Materialtransport aufgrund des sehr hohen Wandreibwerts über die gesamte Deckplattenfläche, auf der die Schrägnocken aufgetragen sind, im Zusammenspiel mit dem inneren Reibwert des Fördergutes. Im Gegensatz dazu handelt es sich bei den bekannten Rohrfördergurten bzw. Taschenfördergurten mit Querstreifen um einen kombinierten, d.h. formschlüssigen und kraftschlüssigen, oder sogar nur um einen formschlüssigen Förderguttransport, wenn die Querstreifen radial so hoch dimensioniert sind, dass sie fast den gesamten Querschnitt des Rohrfördergurtes bzw. Taschenfördergurtes abdecken.

Ein weiterer Vorteil der Schrägnocken-Profilierung für Rohrfördergurte bzw. Taschenfördergurte liegt in ihrer besonderen schräg verlaufenden Anordnung und in der relativ geringen Höhe der Schrägnocken. Bei der schlauchförmigen bzw. tropfenförmigen Verformung haben die kleinen Schrägnocken in jedem Querschnitt des Rohrfördergurtes bzw. Taschenfördergurtes eine relativ geringe punktuelle Biegebeanspruchung. Dagegen wird eine hohe Querstreifen-Profilierung im geschlossenen Rohrfördergurt bzw. Taschenfördergurt einer relativ hohen linearen Biegebeanspruchung ausgesetzt.

Als Zugträger oder auch Festigkeitsträger des Fördergurtes können Stahlseile bei Stahlseilfördergurten, Gewebe bei Gewebefördergurten oder auch Aramid bei Aramidfördergurten verwendet werden. Die Gewebe können aus Polyester, Polyamid, Baumwolle oder Kombinationen hieraus bestehen. Beispielsweise sind bei Gewebefördergurten Gewebekarkassen möglich, die Polyester-Fäden in Kettenrichtung (Längsrichtung) und Polyamid-Fäden in Schussrichtung (Querrichtung) aufweisen (EP-Gewebe). Auch können Polyester-Fäden in beiden Richtungen (EE-Gewebe) oder Polyamid-Fäden in beiden Richtungen (PP-Gewebe) verwendet werden. Ferner können Polyester-, Polyamid- und Baumwoll-Fäden in Kettenrichtung und Polyamid- und Baumwoll-Fäden in Schussrichtung verwendet werden (EP-B-PB-Gewebe). Weil sich PP-Gewebe in der Längsrichtung vergleichsweise stark dehnt und EE-Gewebe vergleichsweise teuer ist, stellt das EP-Gewebe eine Kompromisslösung dar und wird bei Textilgurten am häufigsten verwendet.

Gemäß einem Aspekt der vorliegenden Erfindung entspricht die Breite der Profilierung im Wesentlichen der Gurtbreite zwischen den Randzonen. Dies bedeutet, dass die Profilierung möglichst die gesamte Breite zwischen den sich überlappenden Randzonen einnimmt, um einerseits diese frei zu lassen und die Überlappung bzw. Schließwirkung des Rohrfördergurtes nicht zu beeinträchtigen und andererseits möglichst viel Fördergut über die Profilierung zu halten.

Gemäß einem Aspekt der vorliegenden Erfindung entspricht die Breite der Chevron-Profilierung im Wesentlichen der Gurtbreite bis zur Horizontalen des geschlossenen Taschenfördergurtes. Dies bedeutet, dass die Profilierung so in der Breite des Fördergurtes ausgebildet ist, dass sie bei dem geschlossenen tropfenförmigen Taschenfördergurt das Fördergut in den Bereichen halten kann, in denen das Fördergut durch die Schwerkraft an der tragseitigen Oberfläche des Taschenfördergurtes anliegt. Oberhalb dieser Horizontalen kann auf die Profilierung verzichtet werden, weil hier das Fördergut eher an dem senkrecht darunter gehaltenen Fördergut anliegt und weniger an der tragseitigen Oberfläche des Taschenfördergurtes.

Gemäß einem weiteren Aspekt der vorliegenden Erfindung ist die Profilierung sich in Querrichtung mehrfach, vorzugsweise höchstens dreifach, besonders bevorzugt zweifach, wiederholend angeordnet. Hierzu werden entweder identische oder unterschiedliche Profilierungen in Querrichtung nebeneinander angeordnet, um auch bei breiteren Fördergurten das Fördergut erfindungsgemäß halten zu können. Wird nämlich bei breiteren Gurten die V-Form der Diagonalelemente einmalig über die gesamte Breite des Fördergurtes ausgebildet, so kommt lediglich eine Spitze, in der sich das Fördergut abstützen kann, zur Wirkung. Dies mag für schmalere Gurtbreiten eine ausreichende Wirkung auch bei Neigungswinkeln über 35° Steigung erzeugen, bei breiteren Gurtbreiten sind jedoch mehrere V-förmige Anordnungen der Diagonalelemente vorteilhaft, um die Haltewirkung der Profilierung zu optimieren.

Gemäß einem weiteren Aspekt der vorliegenden Erfindung weist die Profilierung eine Höhe in senkrechter Richtung zur tragseitigen Deckplatte auf, die maximal der zweifachen Gurtdicke, vorzugsweise maximal der eineinhalbfachen Gurtdicke, besonders bevorzugt maximal der einfachen Gurtdicke entspricht. Durch dieses Größenverhältnis wird sichergestellt, dass die Profilierung einstückig mit dem Gurtkörper bzw. mit der tragseitigen Deckplatte ausgebildet werden kann, d.h. gemeinsam vulkanisiert werden können. In konkreten Zahlen sind Gurtdicken bis 50 mm üblich, die durch gängige Produktionsverfahren mit Profilierungen zwischen 10 mm und 50 mm versehen werden können.

Gemäß einem weiteren Aspekt der vorliegenden Erfindung weist die Profilierung eine Höhe in senkrechter Richtung zur tragseitigen Deckplatte auf, die maximal einem Zehntel, vorzugsweise maximal einem Fünfzigstel, besonders bevorzugt maximal einem Hundertstel der Gurtbreite entspricht. Durch dieses Größenverhältnis wird sichergestellt, dass die Profilierung einstückig mit dem Gurtkörper bzw. mit der tragseitigen Deckplatte ausgebildet werden kann, d.h. gemeinsam vulkanisiert werden können. In konkreten Zahlen sind Gurtbreiten für Rollgurte bis 3.200 mm im ungerollten Zustand üblich und mit erhöhtem Aufwand bis 6.400 mm möglich, die durch gängige Produktionsverfahren mit Profilierungen zwischen 10 mm und 50 mm versehen werden können. Für Taschenfördergurte des Typs "Sicon" sind Gurtbreiten bis 1.400 mm im ungefalteten Zustand üblich.

Gemäß der Erfindung weist die Profilierung mehrere einzelne, durch Unterbrechung zueinander beabstandete Diagonalelemente auf, die sich zusammen sowohl in Längsrichtung als auch in Querrichtung des Fördergurtes erstrecken, so dass sie gemeinsam jeweils eine V-Form ergeben, wobei die einzelnen Diagonalelemente eine andere Ausrichtung, vorzugsweise eine sich mehr in Längsrichtung erstreckende Ausrichtung, aufweisen als die Gesamtheit der benachbart angeordneten Diagonalelemente. Auf diese Weise wird die geschlossene V-Form in Einzelelemente unterbrochen, so dass an den Unterbrechungen die inneren Reibkräfte des Fördergutes wirken und dieses so auf dem Fördergurt halten können. Mit anderen Worten werden durch die Zwischenräume zwischen den einzelnen Diagonalelemente die kraftschlüssig wirkenden Kontaktflächen vergrößern. Werden die einzelnen Diagonalelemente in einem steileren Winkel auf der tragseitigen Deckplatte angeordnet als ihre Gesamtheit, die die V-Form bildet, so wirken auch die in Förderrichtung zeigenden Enden der einzelnen Diagonalelemente haltend auf das Fördergut.

Gemäß einem weiteren Aspekt der vorliegenden Erfindung weist die Spitze der V-Form in Längsrichtung entgegen der Förderrichtung eine Längsverlängerung aufweist. Die Längsverlängerung kann die Spitze entgegen der auf dieser ruhenden Last des gehaltenen Fördergutes abstützen.

Gemäß einem weiteren Aspekt der vorliegenden Erfindung weist zumindest eines der Diagonalelemente an seiner der Spitze abgewendeten Enden in Längsrichtung eine Längsverlängerung auf. Diese ist gegenüber den Randzonen bzw. benachbarten Profilierungen so in Längsrichtung erstreckend vorgesehen, dass die Längsverlängerung der Diagonalelemente als seitliches Halteelement für das Fördergut wirken kann.

Gemäß einem weiteren Aspekt der vorliegenden Erfindung ist die Spitze als in Querrichtung verlaufendes Element ausgebildet, welches vorzugsweise durch Aussparungen gegenüber den Diagonalelementen beabstandet ist. Auf diese Weise stellt die Spitze eine querverlaufende Kante dar, die mit den Diagonalelementen verbunden oder vorzugsweise gegenüber diesen beabstandet sein kann. Im letzteren Fall kann in den Unterbrechungen die innere Reibkraft des Fördergutes wirken. In beiden Fällen kann das Fördergut an dieser Kante anders form- und kraftschlüssig gehalten werden als bei einer spitzen Ausführung des Berührpunktes der Diagonalelemente.

Gemäß einem weiteren Aspekt der vorliegenden Erfindung weist der Fördergurt wenigstens eine Querarmierung auf. Diese dient der Stabilität der runden Form des zusammengerollten Rohrfördergurtes, auch bei andauernder und längerer Nutzung. Hierzu können bei Stahlseilfördergurten und Gewebefördergurten sowohl Stahlseilquerarmierungen als auch Gewebequerarmierungen verwendet werden, sowohl gemeinsam als auch alternativ.

Gemäß einem weiteren Aspekt der vorliegenden Erfindung ist die Chevron-Profilierung als Bestandteil der tragseitigen Deckplatte ausgebildet. Dies reduziert die Herstellungskosten und vereinfacht den Transport des Fördergurtes.

Ausführungsbeispiele und weitere Vorteile der Erfindung werden nachstehend im Zusammenhang mit den folgenden Figuren erläutert. Darin zeigt:
- Fig. 1: eine schematische Darstellung eines Schnittes durch einen erfindungsgemäßen Fördergurt;
- Fig. 2: eine schematische Darstellung eines Schnittes durch eine Tragrollenstation eines Rohrfördergurtes;
- Fig. 3a: eine schematische perspektivische Darstellung eines erfindungsgemäßen Stahlseilfördergurtes;
- Fig. 3b: eine schematische perspektivische Darstellung eines erfindungsgemäßen Gewebefördergurtes;
- Fig. 4: eine schematische Draufsicht auf eine bevorzugte Ausführungsform einer einfach angeordneten Profilierung eines erfindungsgemäßen Fördergurtes;
- Fig. 5: eine schematische Draufsicht auf eine bevorzugte Ausführungsform einer doppelt angeordneten Profilierung eines erfindungsgemäßen Fördergurtes;
- Fig. 6a bis 7f: schematische Draufsichten auf verschiedene Ausführungsformen einer einfach angeordneten Profilierung eines Fördergurtes;
- Fig. 8a bis 8f: schematische Draufsichten auf verschiedene Ausführungsformen einer doppelt angeordneten Profilierung eines Fördergurtes; und
- Fig. 9: eine schematische Darstellung eines Schnittes durch einen erfindungsgemäßen Taschenfördergurt.

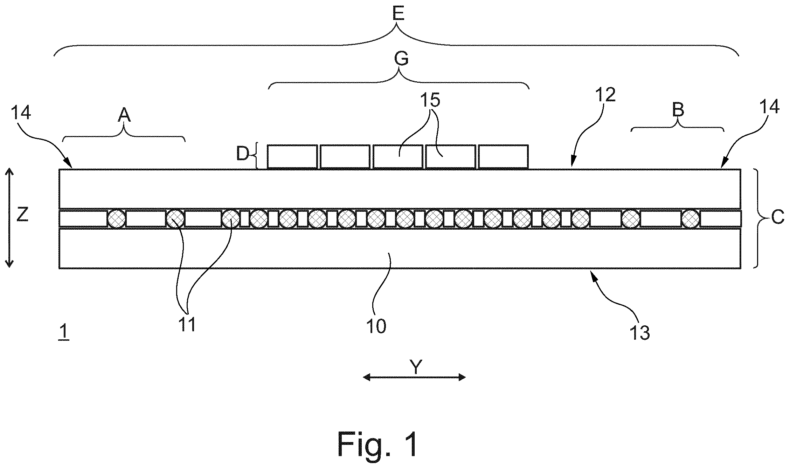

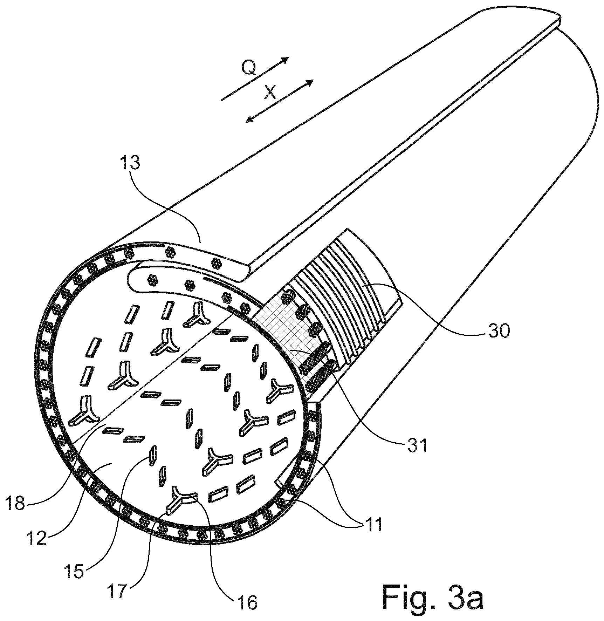

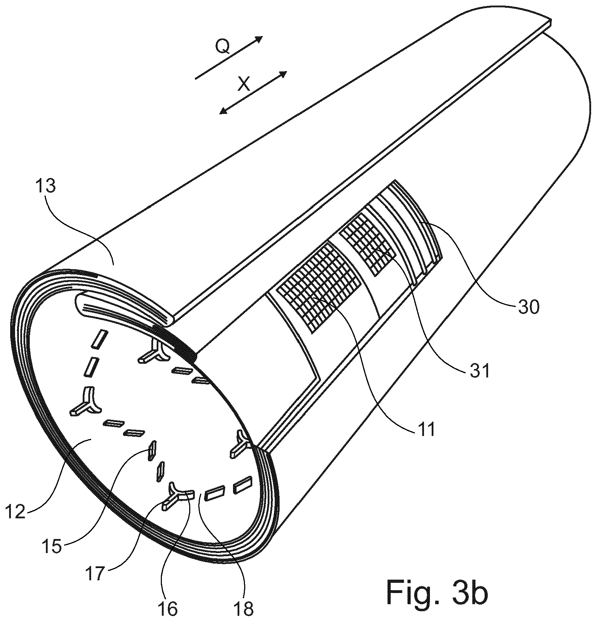

Fig. 1 zeigt eine schematische Darstellung eines Schnittes durch einen erfindungsgemäßen Fördergurt 1. Der Fördergurt 1 weist einen Gurtkörper 10 einer Breite E in Querrichtung Y mit einer tragseitigen Deckplatte 12 und einer laufseitigen Deckplatte 13 auf. Zwischen den beiden Deckplatten 12, 13 sind Zugträger 11 im Gurtkörper 10 eingebettet, die in Längsrichtung X (vgl. Fig. 3a und 3b) verlaufen und die Zugkräfte des Fördergurtes 1 aufnehmen. Als Zugträger 11 oder auch Festigkeitsträger 11 können z.B. Stahlseile 11 bei Stahlseilfördergurten 1 (vgl. Fig. 3a) oder Gewebe 11 (vgl. Fig. 3b) aus z.B. Polyester, Polyamid, Baumwolle etc. bei Gewebefördergurten 1 oder Aramid 11 (nicht dargestellt) bei Aramidfördergurten 1 sein. Die Höhe C des Fördergurtes 1 erstreckt sich in der senkrechten Richtung Z, d.h. senkrecht zur Querrichtung Y und Längsrichtung X.

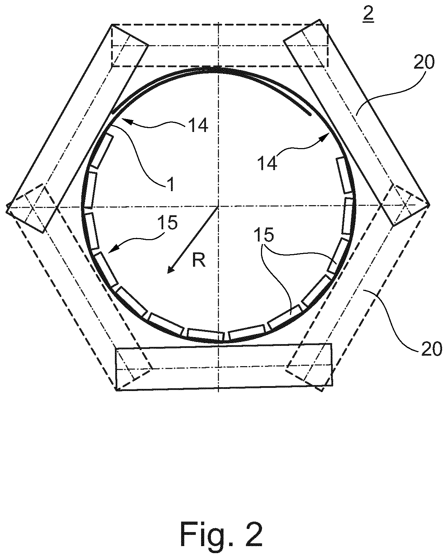

Die tragseitige Deckplatte 12 weist in Querrichtung Y, d.h. in Richtung senkrecht zur Förderrichtung X, jeweils am äußeren Rand A, B einen Überlappungsbereich 14 auf, der auch als Gurtflanke 14 oder Längsrand 14 bezeichnet werden kann. Diese Bereiche 14 dienen der gegenseitigen Überlappung, um den Fördergurt 1 zu einem Rohrfördergurt 1 (Rollgurt 1) zu schließen. Eine entsprechende geschlossene Darstellung des Fördergurtes 1 zwischen den Tragrollen 20 einer Tragrollenstation 2 zeigt die Fig. 2. In dieser Darstellung entspricht die senkrechte Richtung Z des Fördergurtes 1 im ausgebreiteten Zustand (vgl. Fig. 1) der radialen Richtung R des Fördergurtes 1 im zusammengerollten Zustand. Um dem Rohrfördergurt 1 im zusammengerollten Zustand eine stabile runde Form auch über einen längeren Benutzungszeitraum zu geben, d.h. um ein "Zusammenfallen" zu vermeiden, können in oder zwischen den Deckplatten 12, 13 zusätzlich Querarmierungen 30, 31 vorgesehen sein. Dies können Gewebearmierungen 31 oder Stahlseilquerarmierungen 30 sein, d.h. dicht zueinander liegenden dünne Stahlseile.

Auf der tragseitigen Deckplatte 12 ist eine Chevron-Profilierung 15-19 vorgesehen, mittels der das Fördergut (nicht dargestellt) auch bei größeren Steigungen von z.B. über 35 ° bzw. mindestens über eine Böschungswinkel des Schüttgutes gehalten werden soll, d.h. gegen Verrutschen gesichert werden soll. Die Chevron-Profilierung 15-19 weist Diagonalelemente 15 auf, wie sie auch bei Schrägnockenbändern verwendet werden, weshalb diese Diagonalelemente 15 auch als Schrägnocken 15 bezeichnet werden können. Die Diagonalelemente 15 sind vorzugsweise einteilig mit der tragseitigen Deckplatte 12 ausgebildet, d.h. werden bei der Vulkanisation der tragseitigen Deckplatte 12 mit ausgebildet. Sie sind im Bereich zwischen den Randzonen A, B über eine Breite G in Querrichtung Y des Fördergurtes 1 so angeordnet, dass sie eine V-Form ergeben, deren Spitze 16 in Längsrichtung X entgegen der Förderrichtung Q ausgerichtet ist. Die Spitze 16 ist entgegen der Förderrichtung Q durch eine Längsverlängerung 17 abgestützt bzw. verstärkt.

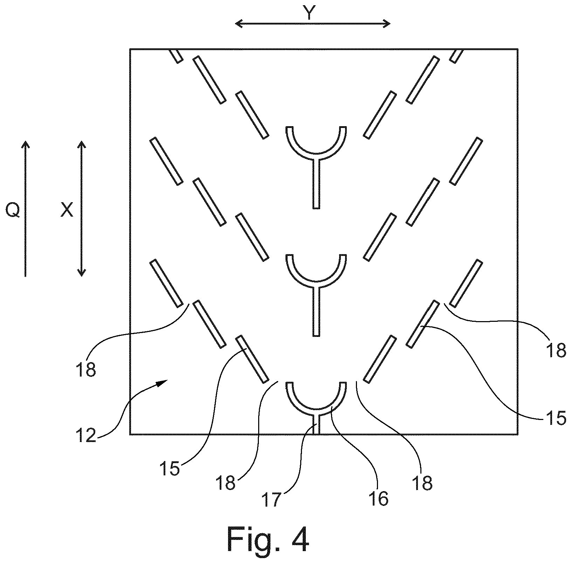

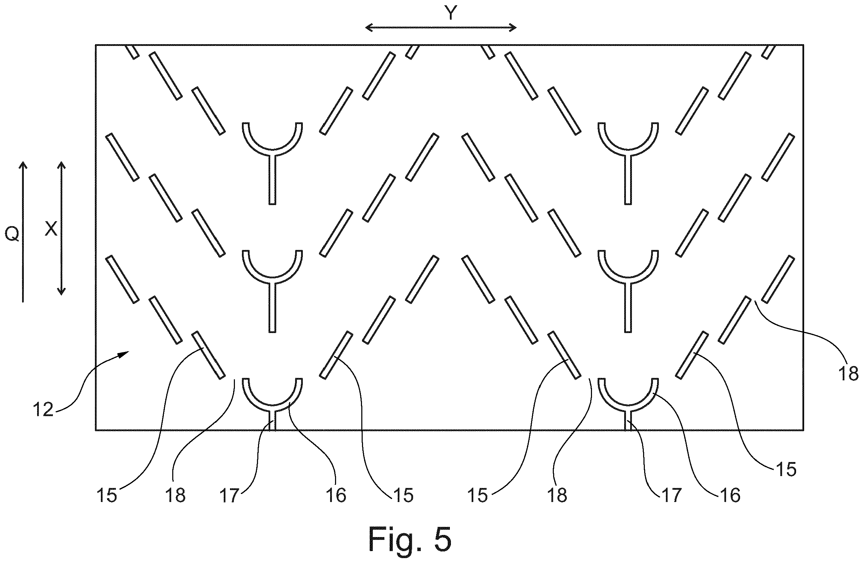

In der bevorzugten Ausführungsform der Fig. 4 ist die Spitze 16 in Förderrichtung Q als Halbrund ausgebildet, um in der hierdurch ausgebildeten Mulde das Fördergut teilweise aufzunehmen und hierdurch zu halten. Die Diagonalelemente 15 sind durch Unterbrechungen 18 beabstandet, so dass die einzelnen Diagonalelemente 15 in ihrer Gesamtheit wieder eine V-Form ergeben. Die einzelnen Diagonalelemente 15 weisen jedoch eine steilere Ausrichtung auf als ihre Gesamtheit. Die Fig. 5 zeigt eine doppelt angeordnete Profilierung der bevorzugten Ausführungsform.

Die Diagonalelemente 15 erstrecken sich sowohl einzeln als auch in ihrer Gesamtheit sowohl in Förderrichtung X als auch in Querrichtung Y. Durch diese Anordnung und ggfs. ihre Unterbrechungen 18 halten die Diagonalelemente 15 das Fördergut im Wesentlichen kraftschlüssig auf der tragseitigen Deckplatte 12. Hierdurch werden auch bei einer geringen Höhe D der Diagonalelemente 15 vergleichsweise große Haltekräfte auf das Fördergut ausgeübt. Diese Kräfte können durch die Ausgestaltung der Diagonalelemente 15 in der Richtung ihrer einzelnen Ausrichtung, der Ausrichtung der Gesamtheit der Schrägnocken 15, ihrer Form und Höhe D etc. beeinflusst werden.

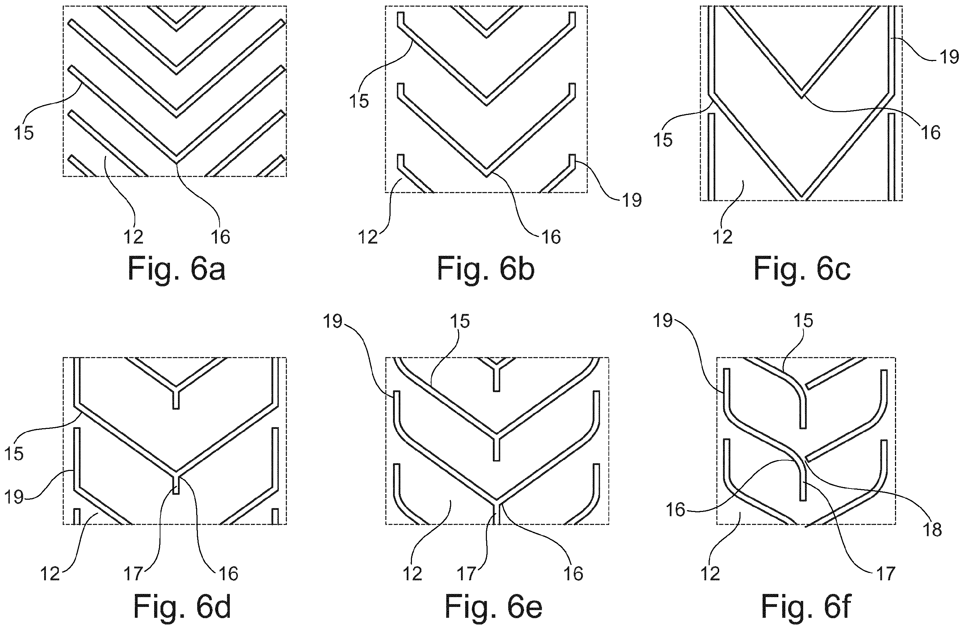

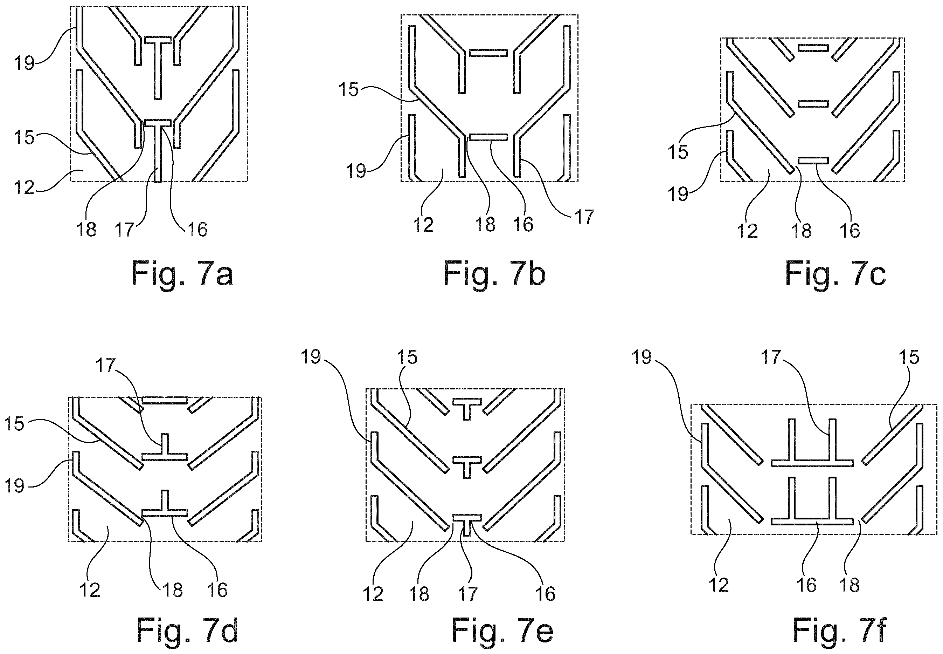

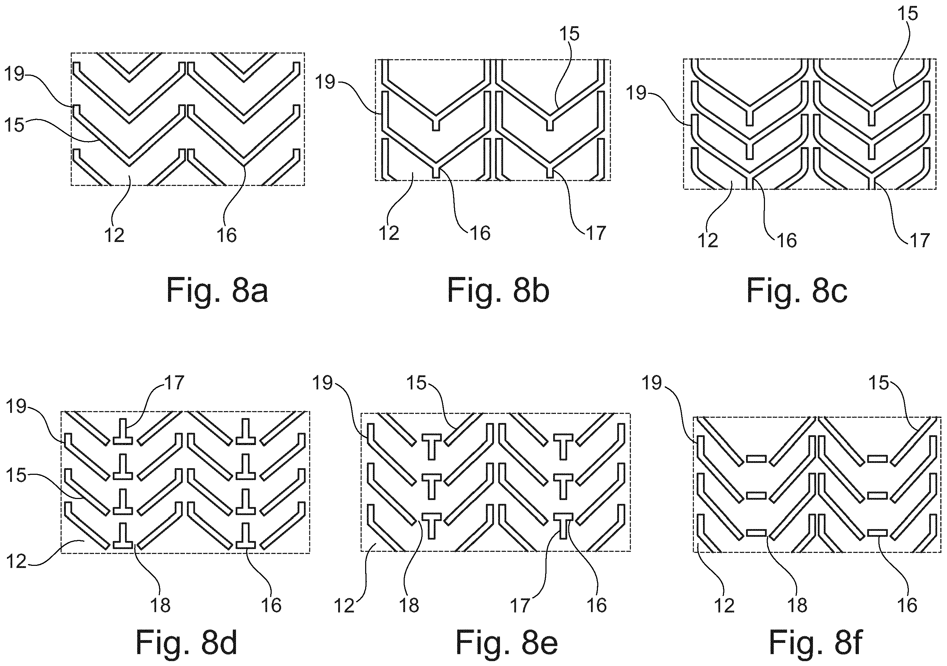

Die Fig. 6a bis 7f zeigen schematische Draufsichten auf verschiedene Ausführungsformen einer einfach angeordneten Profilierung 15-19 eines Fördergurtes 1. Die Fig. 8a bis 8f zeigen den entsprechende Ansichten doppelt angeordneter Profilierungen 15-19. Diese weisen zusätzlich zu den Darstellungen der Fig. 4 und 5 Längsverlängerung 19 der Diagonalelemente 15 als seitliches Halteelement für das Fördergut auf.

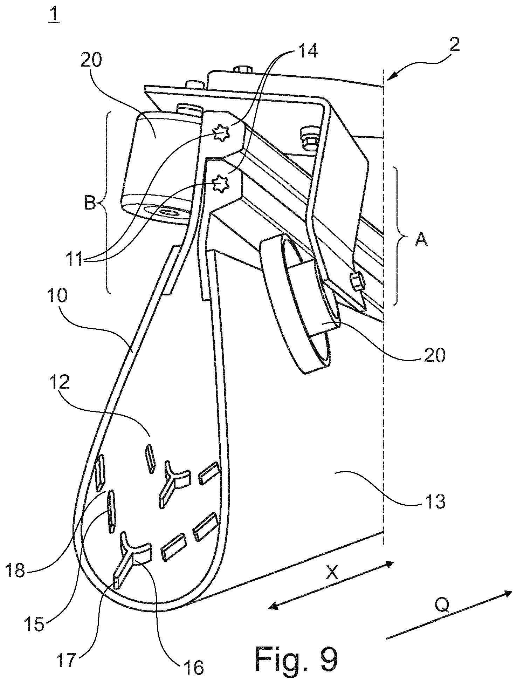

Fig. 9 zeigt eine schematische Darstellung eines Schnittes durch einen erfindungsgemäßen Taschenfördergurt 1. Die beiden Randzonen A, B sind hier an den äußeren seitlichen Kanten 14 des ausgebreiteten Taschenfördergurtes 1 vorgesehen und weisen jeweils einen Zugträger 11 auf. Die beiden Randzonen A, B werden derart aufeinander gelegt, dass im Betrieb die eine Kante 14 senkrecht unter bzw. über der anderen Kante 14 angeordnet ist; in diesem Zustand werden die Kanten 14 zwischen den Tragrollen 20 gehalten. Unter der tragseitigen Deckplatte 12 ist die innere Seite des Gurtkörpers 10 zu verstehen, die die Chevron-Profilierung 15-19 aufweist und das Fördergut (nicht dargestellt) aufnimmt, und unter der laufseitigen Deckplatte 13 ist die äußere Seite des Gurtkörpers 10 zu verstehen, an der die Tragrollen 20 anliegen.

### Bezugszeichenliste

### (Teil der Beschreibung)

- A: erste Randzone
- B: zweite Randzone
- C: Gurtdicke, Gurtstärke, Gurthöhe
- D: Höhe der Profilierung 15
- E: Gurtbreite
- G: Breite der Profilierung 15
- R: Radius, radiale Richtung
- Q: Förderrichtung des Fördergurtes 1
- Y: Querrichtung
- X: Längsrichtung, Förderrichtung
- Z: senkrechte Richtung

- 1: Fördergurt, Rohrfördergurt, Rollgurt, Taschenfördergurt
- 10: Gurtkörper
- 11: Zugträger, Festigkeitsträger
- 12: tragseitige Deckplatte, Tragseite
- 13: laufseitige Deckplatte, Laufseite
- 14: Überlappungsbereich, Längsränder, Gurtflanken
- 15: Diagonalelemente, Schrägnocken der Tragseite 12
- 16: Spitze der Profilierung
- 17: Längsverlängerung der Spitze 16
- 18: Unterbrechung der Diagonalelemente 15 bzw. Spitze 16
- 19: Längsverlängerung der Diagonalelemente 15
- 2: Tragrollenstation
- 20: Tragrollen
- 30: Stahlseilquerarmierung
- 31: Gewebequerarmierung

## Patentansprüche

1. Rohrfördergurt (1), mit
einer tragseitigen Deckplatte (12) und einer laufseitigen Deckplatte (13) mit jeweils einem elastomeren Werkstoff sowie mit einem eingebetteten Zugträger (11), wobei der Rohrfördergurt (1) ausgebildet ist, durch Überlappung seiner beiden Gurtflanken (14) unter Ausbildung zweier sich berührenden Randzonen (A, B) geschlossen zu werden, **dadurch gekennzeichnet, dass** der Rohrfördergurt (1) auf seiner tragseitigen Deckplatte (12) eine im Wesentlichen senkrecht (Z) zur tragseitigen Deckplatte (12) ausgebildete Profilierung (15-19) aufweist,
wobei die Profilierung (15-19) eine Chevron-Profilierung (15-19) ist, die Diagonalelemente (15) aufweist, die sich sowohl in Längsrichtung (X) als auch in Querrichtung (Y) des Rohrfördergurtes (1) erstrecken und die paarweise zusammen jeweils eine V-Form ergeben, deren Spitze (16) in Längsrichtung (X) entgegen der Förderrichtung (Q) ausgerichtet ist, wobei die Chevron-Profilierung (15-19) mehrere einzelne, durch Unterbrechung (18) zueinander beabstandete Diagonalelemente (15) aufweist, die sich zusammen sowohl in Längsrichtung (X) als auch in Querrichtung (Y) des Rohrfördergurtes (1) erstrecken, so dass sie gemeinsam jeweils eine V-Form ergeben,
wobei die einzelnen Diagonalelemente (15) eine andere Ausrichtung aufweisen als die Gesamtheit der benachbart angeordneten Diagonalelemente (15).

2. Taschenfördergurt (1), mit
einer tragseitigen Deckplatte (12) und einer laufseitigen Deckplatte (13) mit jeweils einem elastomeren Werkstoff sowie mit einem eingebetteten Zugträger (11), wobei der Taschenfördergurt (1) ausgebildet ist, durch Überlappung seiner beiden Gurtflanken (14) unter Ausbildung zweier sich berührenden Randzonen (A, B) geschlossen zu werden, **dadurch gekennzeichnet, dass** der Taschenfördergurt (1) auf seiner tragseitigen Deckplatte (12) eine im Wesentlichen senkrecht (Z) zur tragseitigen Deckplatte (12) ausgebildete Profilierung (15-19) aufweist,
wobei die Profilierung (15-19) eine Chevron-Profilierung (15-19) ist, die Diagonalelemente (15) aufweist, die sich sowohl in Längsrichtung (X) als auch in Querrichtung (Y) des Taschenfördergurtes (1) erstrecken und die paarweise zusammen jeweils eine V-Form ergeben, deren Spitze (16) in Längsrichtung (X) entgegen der Förderrichtung (Q) ausgerichtet ist, wobei die Chevron-Profilierung (15-19) mehrere einzelne, durch Unterbrechung (18) zueinander beabstandete Diagonalelemente (15) aufweist, die sich zusammen sowohl in Längsrichtung (X) als auch in Querrichtung (Y) des Taschenfördergurtes (1) erstrecken, so dass sie gemeinsam jeweils eine V-Form ergeben,
wobei die einzelnen Diagonalelemente (15) eine andere Ausrichtung aufweisen als die Gesamtheit der benachbart angeordneten Diagonalelemente (15).

3. Rohrfördergurt (1) oder Taschenfördergurt (1) nach Anspruch 1 oder 2,
wobei die Breite (G) der Chevron-Profilierung (15-19) im Wesentlichen der Gurtbreite (Y) zwischen den Randzonen (A, B) entspricht.

4. Taschenfördergurt (1) nach Anspruch 2, wobei die Breite (G) der Chevron-Profilierung (15-19) im Wesentlichen der Gurtbreite (Y) bis zur Horizontalen des geschlossenen Taschenfördergurtes (1) entspricht.

5. Rohrfördergurt (1) oder Taschenfördergurt (1) nach einem der vorherigen Ansprüche,
wobei die Chevron-Profilierung (15-19) sich in Querrichtung (Y) mehrfach, vorzugsweise höchstens dreifach, besonders bevorzugt zweifach, wiederholend angeordnet ist.

6. Rohrfördergurt (1) oder Taschenfördergurt (1) nach einem der vorherigen Ansprüche,
wobei die Chevron-Profilierung (15-19) eine Höhe (D) in senkrechter Richtung (Z) zur tragseitigen Deckplatte (12) aufweist, die maximal der zweifachen Gurtdicke (C), vorzugsweise maximal der eineinhalbfachen Gurtdicke (C), besonders bevorzugt maximal der einfachen Gurtdicke (C) entspricht.

7. Rohrfördergurt (1) oder Taschenfördergurt (1) nach einem der vorherigen Ansprüche,
wobei die Chevron-Profilierung (15-19) eine Höhe (D) in senkrechter Richtung (Z) zur tragseitigen Deckplatte (12) aufweist, die maximal einem Zehntel, vorzugsweise maximal einem Fünfzigstel, besonders bevorzugt maximal einem Hundertstel der Gurtbreite (E) entspricht.

8. Rohrfördergurt (1) oder Taschenfördergurt (1) nach einem der vorherigen Ansprüche,
wobei die einzelnen Diagonalelemente (15) eine sich mehr in Längsrichtung (X) erstreckende Ausrichtung aufweisen als die Gesamtheit der benachbart angeordneten Diagonalelemente (15).

9. Rohrfördergurt (1) oder Taschenfördergurt (1) nach Anspruch 8,
wobei die Spitze (16) der V-Form in Längsrichtung (X) entgegen der Förderrichtung (Q) eine Längsverlängerung (17) aufweist.

10. Rohrfördergurt (1) oder Taschenfördergurt (1) nach einem der vorherigen Ansprüche,
wobei zumindest eines der Diagonalelemente (15) an seiner der Spitze (16) abgewendeten Enden in Längsrichtung (X) eine Längsverlängerung (19) aufweist.

11. Rohrfördergurt (1) oder Taschenfördergurt (1) nach einem der vorherigen Ansprüche,
wobei die Spitze (16) als in Querrichtung (Y) verlaufendes Element (16) ausgebildet ist, welches vorzugsweise durch Aussparungen (18) gegenüber den Diagonalelementen (15) beabstandet ist.

12. Rohrfördergurt (1) oder Taschenfördergurt (1) nach einem der vorherigen Ansprüche,
wobei der Rohrfördergurt (1) oder Taschenfördergurt (1) wenigstens eine Querarmierung (30, 31) aufweist.

13. Rohrfördergurt (1) oder Taschenfördergurt (1) nach einem der vorherigen Ansprüche,
wobei die Chevron-Profilierung (15-19) als Bestandteil der tragseitigen Deckplatte (12) ausgebildet ist.

## Claims

1. Tubular conveyor belt (1)
having a carrying-side cover panel (12) and a running-side cover panel (13), each with an elastomer material and an embedded tension member (11),
wherein the tubular conveyor belt (1) is designed to be closed by virtue of its two belt flanks (14) overlapping to form two peripheral zones (A, B) in contact with one another, **characterized in that**
the tubular conveyor belt (1), on its carrying-side cover panel (12), has a profiling (15-19) formed essentially perpendicularly (Z) to the carrying-side cover panel (12),
wherein the profiling (15-19) is a chevron profiling (15-19), which has diagonal elements (15) which extend both in the longitudinal direction (X) and in the transverse direction (Y) of the tubular conveyor belt (1) and, together in pairs, each give a V shape, of which the point (16) is oriented in the longitudinal direction (X) counter to the conveying direction (Q),
wherein the chevron profiling (15-19) has a plurality of individual diagonal elements (15), which are spaced apart from one another by an interruption (18) and together extend both in the longitudinal direction (X) and in the transverse direction (Y) of the pocket conveyor belt (1) to give, jointly, a V shape,
wherein the individual diagonal elements (15) have a different orientation to that of all of the adjacent diagonal elements (15) taken as a whole.

2. Pocket conveyor belt (1)
having a carrying-side cover panel (12) and a running-side cover panel (13), each with an elastomer material and an embedded tension member (11),
wherein the pocket conveyor belt (1) is designed to be closed by virtue of its two belt flanks (14) overlapping to form two peripheral zones (A, B) in contact with one another, **characterized in that**
the pocket conveyor belt (1), on its carrying-side cover panel (12), has a profiling (15-19) formed essentially perpendicularly (Z) to the carrying-side cover panel (12),
wherein the profiling (15-19) is a chevron profiling (15-19), which has diagonal elements (15) which extend both in the longitudinal direction (X) and in the transverse direction (Y) of the pocket conveyor belt (1) and, together in pairs, each give a V shape, of which the point (16) is oriented in the longitudinal direction (X) counter to the conveying direction (Q),
wherein the chevron profiling (15-19) has a plurality of individual diagonal elements (15), which are spaced apart from one another by an interruption (18) and together extend both in the longitudinal direction (X) and in the transverse direction (Y) of the pocket conveyor belt (1) to give, jointly, a V shape,
wherein the individual diagonal elements (15) have a different orientation to that of all of the adjacent diagonal elements (15) taken as a whole.

3. Tubular conveyor belt (1) or pocket conveyor belt according to Claim 1 or 2,
wherein the width (G) of the chevron profiling (15-19) corresponds essentially to the belt width (Y) between the peripheral zones (A, B).

4. Pocket belt (1) according to Claim 2,
wherein the width (G) of the chevron profiling (15-19) corresponds essentially to the belt width (Y) up to the horizontal of the closed pocket conveyor belt (1).

5. Tubular conveyor belt (1) or pocket conveyor belt (1) according to one of the preceding claims,
wherein the chevron profiling (15-19) is repeated a number of times, preferably not more than three times, particularly preferably twice, in the transverse direction (Y).

6. Tubular conveyor belt (1) or pocket conveyor belt (1) according to one of the preceding claims,
wherein the chevron profiling (15-19) has a height (D), as seen in the direction (Z) perpendicular to the carrying-side cover panel (12), which corresponds to a maximum of twice the belt thickness (C), preferably to a maximum of one and a half times the belt thickness (C), particularly preferably to a maximum of a single belt thickness (C).

7. Tubular conveyor belt (1) or pocket conveyor belt (1) according to one of the preceding claims,
wherein the chevron profiling (15-19) has a height (D), as seen in the direction (Z) perpendicular to the carrying-side cover panel (12), which corresponds to a maximum of a tenth, preferably to a maximum of a fiftieth, particularly preferably to a maximum of a hundredth, of the belt width (E).

8. Tubular conveyor belt (1) or pocket conveyor belt (1) according to one of the preceding claims,
wherein the individual diagonal elements (15) have an orientation extending more in the longitudinal direction (X) than that of all the adjacent diagonal elements (15) taken as a whole.

9. Tubular conveyor belt (1) or pocket conveyor belt (1) according to Claim 8,
wherein the point (16) of the V shape has a longitudinal extension (17) in the longitudinal direction (X) counter to the conveying direction (Q).

10. Tubular conveyor belt (1) or pocket conveyor belt (1) according to one of the preceding claims,
wherein at least one of the diagonal elements (15), at its ends directed away from the point (16), has a longitudinal extension (19) in the longitudinal direction (X) .

11. Tubular conveyor belt (1) or pocket conveyor belt (1) according to one of the preceding claims,
wherein the point (16) is designed in the form of an element (16) which runs in the transverse direction (Y) and is spaced apart from the diagonal elements (15) preferably by clearances (18).

12. Tubular conveyor belt (1) or pocket conveyor belt (1) according to one of the preceding claims,
wherein the tubular conveyor belt (1) or pocket conveyor belt (1) has at least one transverse reinforcement (30, 31).

13. Tubular conveyor belt (1) or pocket conveyor belt (1) according to one of the preceding claims,
wherein the chevron profiling (15-19) is designed in the form of a constituent part of the carrying-side cover panel (12).

## Revendications

1. Bande transporteuse tubulaire (1), comprenant
une plaque de revêtement côté support (12) et une plaque de revêtement côté roulement (13), chacune d'elle étant en un matériau élastomère, et un élément de traction incorporé (11),
la bande transporteuse tubulaire (1) étant conçue pour être fermée par superposition de ses deux bords (14) pour former deux zones de bord en contact (A, B),
**caractérisé en ce que** la bande transporteuse tubulaire (1) comporte sur sa plaque de revêtement côté support (12) un profilé (15 à 19) formé sensiblement perpendiculairement (Z) à la plaque de revêtement côté support (12),
le profilé (15 à 19) étant un profilé en chevron (15 à 19) qui comporte des éléments diagonaux (15) qui s'étendent dans la direction longitudinale (X) et dans la direction transversale (Y) de la bande de transport tubulaire (1) et qui confèrent à chaque fois conjointement par paires une forme en V dont la pointe (16) est orientée dans la direction longitudinale (X) à l'opposé de la direction de transport (Q),
le profilé en chevron (15 à 19) comportant une pluralité d'éléments diagonaux individuels (15) qui sont espacés les uns des autres par une interruption (18) et qui s'étendent conjointement dans la direction longitudinale (X) et dans la direction transversale (Y) de la bande transporteuse tubulaire (1) de façon à conférer à chaque fois conjointement une forme de V, les éléments diagonaux individuels (15) ayant une orientation différente de celle de l'ensemble des éléments diagonaux (15) disposés de manière adjacente.

2. Bande transporteuse en forme de poche (1), comprenant
une plaque de revêtement côté support (12) et une plaque de revêtement côté roulement (13), chacune d'elles étant en un matériau élastomère et un élément de traction incorporé (11), la bande transporteuse en forme de poche (1) étant formée par chevauchement de ses deux bords (14) pour former deux zones de bord en contact (A, B),
**caractérisé en ce que** la bande transporteuse en forme de poche (1) comporte sur sa plaque de revêtement côté support (12) un profilé (15 à 19) sensiblement perpendiculaire (Z) à la plaque de revêtement côté support (12),
le profilé (15 à 19) étant un profilé en chevron (15 à 19) qui comporte des éléments diagonaux (15) qui s'étendent dans la direction longitudinale (X) et dans la direction transversale (Y) de la bande transporteuse en forme de poche (1) et qui ont chacun conjointement par paires une forme de V dont la pointe (16) est orientée dans la direction longitudinale (X) à l'opposé de la direction de transport (Q),
le profilé en chevron (15 à 19) comportant une pluralité d'éléments diagonaux individuels (15) qui sont séparés par une interruption (18) et qui s'étendent conjointement dans la direction longitudinale (X) et dans la direction transversale (Y) de la bande transporteuse en forme de poche (1) de manière à conférer à ce qu'ils aient chacun conjointement une forme de V,
les éléments diagonaux individuels (15) ayant une orientation différente de celle de l'ensemble des éléments diagonaux (15) disposés de manière adjacente.

3. Bande transporteuse tubulaire (1) ou bande transporteuse en forme de poche (1) selon la revendication 1 ou 2, la largeur (G) du profilé en chevron (15 à 19) correspondant sensiblement à la largeur (Y) de la bande entre les zones de bord (A, B).

4. Bande transporteuse en forme de poche (1) selon la revendication 2, la largeur (G) du profilé en chevron (15 à 19) correspondant sensiblement à la largeur (Y) de la bande jusqu'à l'horizontale de la bande transporteuse en forme de poche (1) fermée.

5. Bande transporteuse tubulaire (1) ou bande transporteuse en forme de poche (1) selon l'une des revendications précédentes,
le profilé en chevron (15 à 19) étant disposé de façon répétée plusieurs fois, de préférence trois fois maximum, de manière particulièrement préférée deux fois, dans la direction transversale (Y).

6. Bande transporteuse tubulaire (1) ou bande transporteuse en forme de poche (1) selon l'une des revendications précédentes,
le profil en chevron (15 à 19) ayant une hauteur (D) dans la direction (Z) perpendiculaire à la plaque de revêtement côté support (12), laquelle hauteur correspond au maximum à deux fois l'épaisseur (C) de la bande, de préférence une fois et demie l'épaisseur (C) de la bande, de manière particulièrement préférée au maximum une fois l'épaisseur (C) de la bande.

7. Bande transporteuse tubulaire (1) ou bande transporteuse en forme de poche (1) selon l'une des revendications précédentes,
le profilé en chevron (15-19) ayant une hauteur (D) dans la direction (Z) perpendiculaire à la plaque de revêtement côté support (12) qui correspond au maximum à un dixième, de préférence au maximum à un cinquantième, de manière particulièrement préférée au maximum à un centième de la largeur (E) de la bande.

8. Bande transporteuse tubulaire (1) ou bande transporteuse en forme de poche (1) selon l'une des revendications précédentes,
les éléments diagonaux individuels (15) ayant une orientation s'étendant davantage dans la direction longitudinale (X) que l'ensemble des éléments diagonaux (15) disposés de manière adjacente.

9. Bande transporteuse tubulaire (1) ou bande transporteuse en forme de poche (1) selon la revendication 8,
la pointe (16) de la forme en V présentant une extension longitudinale (17) dans la direction longitudinale (X) à l'opposé de la direction de transport (Q).

10. Bande transporteuse tubulaire (1) ou bande transporteuse en forme de poche (1) selon l'une des revendications précédentes,
au moins un des éléments diagonaux (15) présentant à ses extrémités opposées à la pointe (16) une extension longitudinale (19) dans la direction longitudinale (X).

11. Bande transporteuse tubulaire (1) ou bande transporteuse en forme de poche (1) selon l'une des revendications précédentes,
la pointe (16) étant conçue comme un élément (16) s'étendant dans la direction transversale (Y) et de préférence espacé des éléments diagonaux (15) par des évidements (18).

12. Bande transporteuse tubulaire (1) ou bande transporteuse en forme de poche (1) selon l'une des revendications précédentes,
la bande transporteuse tubulaire (1) ou la bande transporteuse en forme de poche (1) comportant au moins un renforcement transversal (30, 31).

13. Bande transporteuse tubulaire (1) ou bande transporteuse en forme de poche (1) selon l'une des revendications précédentes,
le profilé en chevron (15 à 19) étant conçu comme faisant partie de la plaque de revêtement côté support (12) .
